Europäisches Patentamt

European Patent Office

Office européen des brevets

(19)

(11) Numéro de publication: **0 003 092**
**B1**

(12) **FASCICULE DE BREVET EUROPEEN**

(21) Numéro de dépôt: 78400270.1

(22) Date de dépôt: **29.12.78**

(51) Int. Cl.³: **G 02 B 5/14**

(54) **Embout pour faisceau de fibres optiques à rangement hexagonal et connecteur utilisant de tels embouts**

(30) Priorité: **06.01.78 FR 7800307**

(43) Date de publication de la demande:
**25.07.79 Bulletin 79/15**

(45) Mention de la délivrance du brevet:
**07.01.81 Bulletin 81/01**

(84) Etats contractants désignés:
**DE GB IT**

(56) Documents cités:
**FR - A - 2 332 544**

(73) Titulaire: **"THOMSON-CSF"**
**173, Boulevard Haussmann**
**F - 75360 Paris Cedex 08 (FR)**

(72) Inventeur: **Dubos, Jacques**
**"THOMSON-CSF" - SCPI 173, bld Haussmann**
**F - 75360 Paris Cedex 08 (FR)**
**Jacques, André**
**"THOMSON-CSF" - SCPI 173, bld Haussmann**
**F - 75360 Paris Cedex 08 (FR)**

(74) Mandataire: **Desperrier, Jean-Louis, et al**
**"Thomson-CSF" - SCPI 173, bld Haussmann**
**F - 75360 Paris Cedex 08 (FR)**

Courier Press, Leamington Spa, England.

**Embout pour faisceau de fibres optiques à rangement hexagonal et connecteur utilisant de tels embouts**

L'invention se rapporte à la connexion de faisceaux de fibres optiques et a plus particulièrement pour objet un embout pour faisceau de fibres optiques à rangement hexagonal et un connecteur utilisant de tels embouts.

Il est connu que les faisceaux de fibres optiques comportant un nombre de fibres de même diamètre, tel que ces fibres puissent être rangées dans un hexagone, sont particulièrement adaptés aux connexions directes entre faisceaux. Très généralement, ces faisceaux comportent un nombre N de fibres : 7, 19, 37 ... répondant à la formule générale $N = 1 + 3n(n - 1)$.

Lorsque les fibres des deux faisceaux à connecter sont comprimées, les fibres se rangent dans des hexagones quasi parfaits, les fibres étant tangentes les unes aux autres. Un tel arrangement fournit donc des faisceaux de compacité maximale. Si les embouts sont tels que les hexagones formés par les fibres sont repérés angulairement par rapport aux embouts euxmêmes, il est alors possible de connecter deux embouts semblables sand tâtonnement, les fibres des deux faisceaux connectés étant disposées individuellement bout à bout. Des dispositifs comportant dans les embouts euxmêmes des pièces hexagonales orientées par rapport aux hexagones des fibres, le rangement hexagonal étant obtenu par insertion des fibres dans des pièces hexagonales, ont été précédemment décrits, par exemple dans la demande de brevet n° 75 35 651 déposée en France le 21 Novembre 1975 (n° de publication 2 332 544).

Cette demande de brevet n° 75 35 651 déposé en France le 21 Novembre 1975, décrit un embout comportant à l'extrémité à connecter un méplat orienté par rapport à l'hexagone formé par les fibres. C'est un embout qui comprend une pièce externe cylindrique comportant une cavité coaxiale dans laquelle est inséré un manchon en matériau déformable. L'extrémité de l'embout et du manchon sont initialement percés à un diamètre supérieur à celui du faisceau de fibres dénudé de son enveloppe. Après introduction du faisceau de fibre dans l'embout, un piston, introduit dans la cavité coaxiale déforme la rondelle par compression axiale pour lui faire enserrer étroitement le pourtour du faisceau qui s'arrange en hexagone. Pour permettre de repérer sur l'embout une direction caractéristique de l'empilage hexagonal compact des fibres, le manchon déformable inséré à l'intérieur de l'extrémité de l'embout comporte un perçage intérieur hexagonal obligeant les fibres à se ranger selon un hexagone de même orientation. L'embout comprend en plus, sur sa surface extérieure un méplat rigoureusement parallèle à l'une des facettes du prisme hexagonal constituant le perçage du manchon.

De tels dispositifs sont coûteux car ils nécessitent des pièces hexagonales usinées très précisemment de telle manière que les fibres des faisceaux soient convenablement maintenues et puissent cependant y être insérées.

De plus, le manchon extérieur utilisé pour la connexion entre deux embouts identiques doit lui-même comporter un méplat intérieur pour assurer l'aboutement correct des deux embouts, ce qui complique l'usinage de ce manchon extérieur.

Pour pallier ces inconvénients, l'invention concerne des embouts pour faisceaux de fibres optiques à rangement hexagonal simples et de faible coût permettant de résoudre simplement, lors de la connexion, les problèmes de positionnements angulaire et axial d'un faisceau par rapport à l'autre faisceau.

Elle a plus précisément pour objet um embout pour faisceau de fibres optiques à rangement hexagonal comprenant un corps cylindrique creux comportant une partie postérieure filetée et une partie antérieure dont la surface externe lisse, centrée par rapport à son axe est une surface de référence pour le positionnement des différents éléments formant l'embout et à l'intérieur duquel sont placées les fibres, ces fibres étant maintenues par un manchon malléable placé à l'intérieur du corps qui les enserre et écrasé de telle sorte qu'elles présentent un agencement hexagonal à l'extrémité à connecter, un organe de détrompage assurant la concordance angulaire d'un tel agencement avec son homologue, caractérisé en ce que l'organe de détrompage est une pièce cylindrique emboîtée sur la surface de référence et dont l'extrémité côté connexion se présente sous la forme d'une couronne découpée en dents de scie de forme symétrique, avec 3 n dents occupant chacune un secteur de

$$\frac{120°}{n},$$

n étant l'un des nombres 1 et 2, cette pièce de détrompage coopérant avec son homologue pour obtenir progressivement le positionnement angulaire des faisceaux de fibres à abouter et en fin d'aboutement leur positionnement axial.

Par rapport à l'embout connu, cette solution présente un certain nombre d'avantages. Tout d'abord, elle exploite la symétrie hexagonale de l'arrangement du faisceau de fibres pour laquelle il existe fondamentalement 6 positions d'aboutement équivalentes angulairement distantes l'une de l'autre de 60°. Ensuite, la forme dentelée de l'extrémité de la pièce de détrompage et son positionnement axial par rapport à l'extrémité du faisceau de fibres permet un aboutement en aveugle entre deux faisceaux munis de ces embouts, quelle que soit la position angulaire initiale des embouts l'un par rapport à l'autre: l'emboîtement des deux couronnes dentelées assure ipso facto un aboutement correct, angulairement et axialement.

De plus, le positionnement angulaire à postériori de la pièce de détrompage par rapport à l'hexagone formé par les fibres supprime la nécessité de l'usinage hexagonal de l'intérieur de certaines pièces de l'embout, ce qui facilite son exécution et en réduit le coût.

On peut citer encore que la surface extérieure de cette pièce de détrompage étant parfaitement cylindrique, le manchon de connexion permettant de réunir deux embouts est lui aussi intérieurement parfaitement cylindrique.

L'invention sera mieux comprise et d'autres caractéristiques apparaîtront à l'aide de la description qui suit en référence aux figures annexées.

La figure 1 représente un premier mode de réalisation de l'embout pour faisceau à rangement hexagonal suivant l'invention;

La figure 2 représente un second mode de réalisation de cet embout;

La figure 3 représente en coupe transversale a) et en vue de côté b) l'extrémité de l'embout.

L'embout suivant l'invention est destiné à équiper les faisceaux de fibres comportant 7 19, 37 ou 61 fibres par exemple (suivant la formule N = 1 + 3n (n − 1) où N est le nombre de fibres et n un nombre entier quelconque. En effet les fibres de tels faisceaux peuvent être rangées dans un hexagone régulier par fluage (lorsque les fibres ont toutes sensiblement les mêmes diamètres).

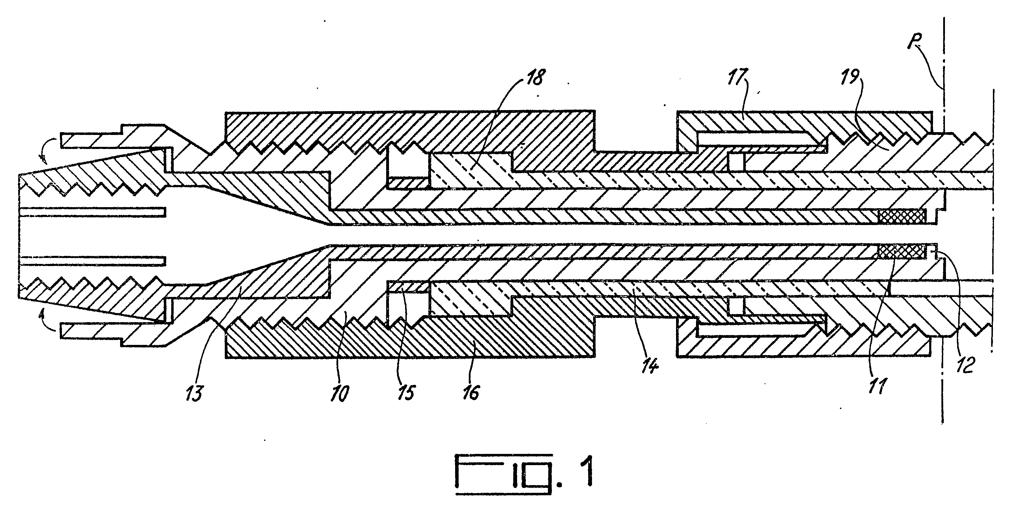

La figure 1 représente un premier mode de réalisation de l'embout. Dans un tel dispositif, le positionnement du faisceau par rapport à l'embout est défini par une surface de référence cylindrique et de révolution faisant partie du pourtour extérieur de l'embout. Le centrage du faisceau de fibres par rapport à cette surface de référence et son arrangement selon un assemblage hexagonal compact sont obtenus en comprimant, suivant la direction longitudinale de l'embout, un manchon de matériau déformable disposée dans une cavité concentrique à la surface de référence et percée selon l'axe de cette surface pour permettre le passage du faisceau.

A cet effet l'embout représenté comporte donc une pièce externe cylindrique 10 à section droite circulaire, comportant une cavité de même forme dans laquelle est insérée le manchon 11 de matériau déformable. Ce manchon s'appuie sur une butée en forme d'anneau 12, partie de la pièce cylindrique 10. Après introduction du faisceau de fibres par l'embout, le piston 13, fait pression sur le manchon 11 pour lui faire enserrer étroitement le pourtour du faisceau, la compression axiale produisant une déformation radiale. Pour cela, l'arrière du piston 13 se termine par une partie tronconique dans laquelle sont ménagées quatre fentes parallèles à l'axe de l'embout. L'ensemble de cette partie tronconique, munie sur sa face interne cylindrique de dents, forme une mâchoire qui grâce au jeu permis par les fentes vient, sous l'action de l'extrémité déformable de la pièce 10, enserrer l'enveloppe du faisceau lors de l'opération de sertissage. En effet l'extrémité de la pièce 10, est déformée sous l'action de la pince à sertir, et vient exercer une pression sur la partie tronconique du piston 13. Cette pression a pour effet de faire coulisser le piston vers l'extrémité avant, comprimant ainsi le manchon 11 et a également pour effet de déformer la partie tronconique qui maintient ainsi l'enveloppe du faisceau.

Si les fibres du faisceau ont toutes sensiblement le même diamètre et si le nombre N de fibres du faisceau répond à la formule susmentionnée, la compression des fibres du faisceau conduit à un arrangement hexogonal compact qui fournit la compacité maximale du faisceau. En vue de connecter deux faisceaux de fibres optiques ainsi arrangés, il est nécessaire de prévoir une pièce de "détrompage" dans laquelle l'hexagone formé par les fibres sera très précisément orienté et qui s'emboîtera dans une pièce analogue dans laquelle le second hexagone formé par les fibres du second faisceau sera également orienté, l'emboîtement étant tel que, les hexagones étant orientés dans le prolongement l'un de l'autre, les fibres d'un faisceau sont exactement en face des fibres de l'autre faisceau; les pertes lors de la transmission sont ainsi très réduites.

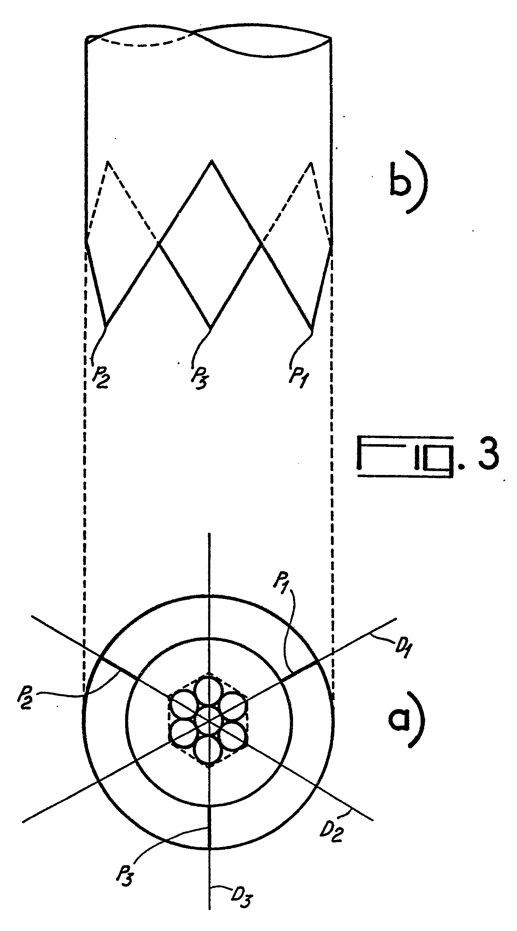

La pièce de détrompage emboîtable 14 comprend un corps cylindrique creux; ce corps se termine du côté à connecter par trois dents occupant chacune un secteur de 120°. La figure 3 montre en a) l'extrémité de l'embout en coupe transversale et en b) l'extrémité correspondante de la pièce de détrompage. Cette pièce de détrompage est montée de la manière suivante: une rondelle de métal 15, déformable, en plomb par exemple, est enfilée autour du corps cylindrique de la pièce 10 sur laquelle elle vient en butée à une distance déterminée de l'extrémité de l'embout. La pièce de détrompage est alors enfilée elle aussi autour du corps cylindrique de la pièce 10. La fixation de cette pièce de détrompage à l'ensemble est effectuée par une pièce de fixation 16 à laquelle est liée de manière définitive une pièce mobile formant écrou 17 destinée lors de la connexion au verrouillage du connecteur, comme expliqué ci-après. La pièce 16 est usinée pour s'appuyer sur un plan de référence 18 de la pièce emboîtable 14 et comporte un filetage pour le vissage de la pièce 10.

Les différentes cavités cylindriques sont toutes centrées les unes par rapport aux autres. Le vissage de la pièce de fixation 16 et du corpes 10 permet un prépositionnement de la pièce de détrompage 14 par rapport au faisceau, prépositionnement qui assure le positionnement suivant l'axe de l'embout des différents éléments. Il reste alors à effectuer un réglage angulaire de la pièce de détrompage par rapport au faisceau de fibres pour que trois des sommets de l'hexagone soient sur les rayons correspondant aux trois pointes de l'élément positionneur emboîtable 14. Un tel réglage angulaire est obtenu en tournant la pièce 10 et en même temps qu'elle le piston et le faisceau par rapport à la pièce de fixation 16, immobile par rapport à la pièce emboîtable 14, d'un angle supplémentaire tel que les sommets de l'hexagone formé par les fibres soient correctement positionnées par rapport aux pointes de la pièce de détrompage. Ce jeu supplémentaire, qui est au plus égal à un sixième de tour est obtenu par modification des cotes de la rondelle 15.

Ce réglage est effectué lors de la mise en position de l'embout sur le faisceau. Pour cela on dispose d'un système optique de réglage permettant de projeter l'image de l'extrémité du faisceau de fibres et un réticule ayant la configuration de trois droites concourantes formant à leur intersection des angles de 60°, $D_1$, $D_2$ et $D_3$ sur la figure 3a). Les trois lignes du réticule sont préalablement réglées sur les trois pointes $P_1$, $P_2$ et $P_3$ de la pièce de détrompage. Puis en tournant la pièce de référence 10 rigidement liée au faisceau à l'intérieur de la pièce de fixation 16, les sommets de l'hexagone sont amenées en coincidence avec les droites sécantes du réticule.

La fixation de l'embout ainsi réalisée est donc telle que le faisceau de fibres a une compacité maximale, est centré par rapport à une surface de référence qui est la face externe du corps cylindrique 10, et est orienté angulairement par rapport à une pièce de détrompage qui permettra lors de la connexion d'obtenir un positionnement automatique des fibres d'un faisceau par rapport aux fibres d'un second faisceau comportant un embout identique par simple emboîtement.

La figure 1 représente également, pour partie, la pièce mécanique de liaison 19 destinée à la connexion. Cette pièce de liaison, symétrique par rapport au plan P, est une pièce cylindrique creuse filetée sur sa face extérieure au diamètre des écrous 17. La connexion est effectuée en vissant la pièce de fixation 19 dans l'écrou de l'un des embouts puis en amenant l'autre embout en face du premier de manière à effectuer une imbrication des deux pièces de détrompage telles que 14, les extrémités des faisceaux étant alors en contact dans le plan P et les fibres de l'un des faisceaux étant en face des fibres de l'autre automatiquement du fait de la préorientation angulaire effectuée lors de la mise en position des embouts munis des pièces emboîtables sur les faisceaux (comme expliqué ci-dessus). L'écrou du second embout est alors vissé sur la pièce mécanique de liaison. Du fait de la structure des pièces de détrompage l'alignement des deux faisceaux est également obtenu. Les embouts sont donc adaptés à une connexion rapide et précise de deux faisceaux hexagonaux.

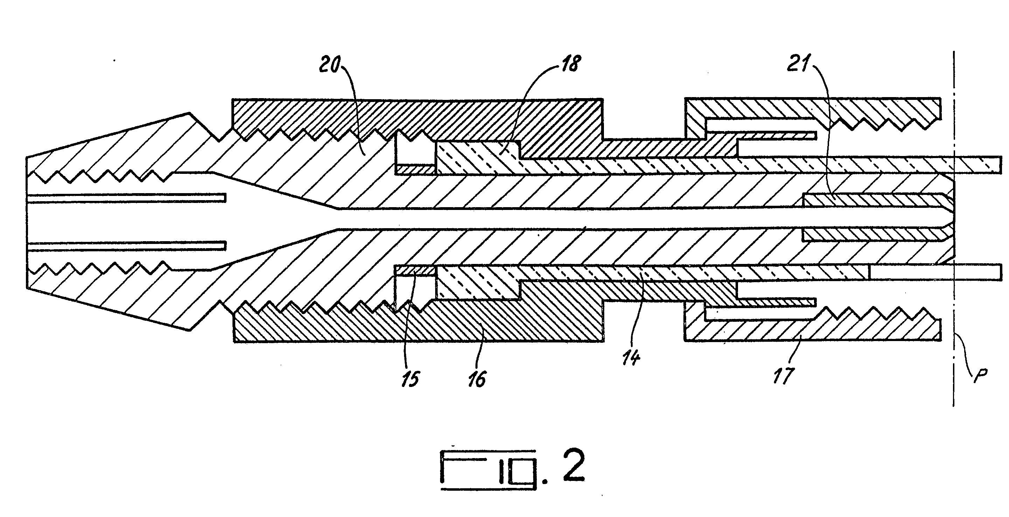

La figure 2 représente un autre mode de réalisation de l'embout simplifié par rapport au premier quant à sa structure. En effet le rangement hexagonal n'est plus effectué, comme avec l'embout représenté sur la figure 1, par un piston coulissant dans une pièce cylindrique pour venir appuyer, selon la direction axiale de l'embout, sur un manchon malléable enserrant le faisceau jusqu'à ranger les fibres dans un hexagone.

L'embout représenté sur la figure 2 est serti par pression radiale sur la circonférence du manchon malléable. Ce sertissage peut être effectué de manière simple par un dispositif de sertissage. A cet effet l'embout comporte une pièce cylindrique 20 dont la face extérieure est la surface de référence pour le centrage des différentes pièces du connecteur les unes par rapport aux autres. Cette pièce 20 comporte un évidement dans lequel a été placé un manchon malléable 21.

Le faisceau de fibres est introduit dans le dispositif à sertir qui produit une compression radiale du manchon autour des fibres déformant ainsi définitivement le manchon et l'embout qui enserrent ainsi le faisceau. Le sertissage est effectué jusqu'à ce que le faisceau ait atteint sa section minimale, les fibres du faisceau étant alors rangées dans un hexagone. L'extrémité du faisceau est alors polie jusqu'à ce plan de section minimale.

Une fois ce rangement obtenu et de la même manière que précédemment, une bague 15, en plomb par exemple, est enfilée autour du corps cylindrique 20. Puis la pièce de détrompage 14 est également enfilée autour de ce corps cylindrique. La pièce de liaison 16 est alors vissée sur le corps 20, cette liaison produisant un positionnement axial précis de la pièce de détrompage 14 par rapport au corps 20 et donc par rapport au plan P de l'extrémité du faisceau.

Le positionnement angulaire fin de la pièce de détrompage 14 par rapport à l'hexagone formé par les fibres du faisceau est obtenu en ajustant par rotation d'au plus un sixième de tour cette même pièce 16 par rapport au corps cylindrique 20 en modifiant légèrement les cotes de la rondelle 15. La pièce de liaison 16 est, comme dans l'embout représenté sur la figure 1, muni d'un écrou prisonnier de cette pièce 16 et destiné à assurer la connexion de cet embout avec un autre embout monté sur un faisceau de fibres semblables. La pièce de connexion intermédiaire 19 n'a pas été représentée sur cette figure.

La pièce de détrompage emboîtable décrit est telle que son extrémité est découpée pour former trois dents occupant chacune un secteur de 120°, les pointes de ces dents étant orientées suivant des rayons sur lesquels se trouvent des sommets de l'hexagone. Il est possiblé d'utiliser par exemple une pièce de détrompage comportant 6 dents occupant chacune un secteur de 60°. L'orientation d'une pointe de la pièce de détrompage par rapport à un sommet de l'hexagone conduit alors à un positionnement de toutes les dents par rapport à tous les sommets.

## Revendications

1. Embout pour faisceau de fibres optiques à rangement hexagonal comprenant un corps cylindrique creux (10) comportant une partie postérieure filetée et une partie antérieure dont la surface externe lisse, centrée par rapport à son axe est une surface de référence pour le positionnement des différents éléments formant l'embout et à l'intérieur duquel sont placées les fibres, ces fibres étant maintenues par un manchon malléable (11) placé à l'intérieur du corps qui les enserre et écrasé de telle sorte qu'elles présentent un agencement hexagonal à l'extrémité à connecter, un organe de détrompage assurant la concordance angulaire d'un tel agencement avec son homologue, caractérisé en ce que l'organe de détrompage est une pièce cylindrique (14) emboîtée sur la surface de référence et dont l'extrémité côté connexion se présente sous la forme d'une couronne découpée en dents de scie de forme symétrique, avec 3 n dents occupant chacune un secteur de

$$\frac{120°}{n},$$

n étant l'un des nombres 1 et 2, cette pièce de détrompage coopérant avec son homologue pour obtenir progressivement le positionnement angulaire des faisceaux de fibres à abouter et en fin d'aboutement leur positionnement axial.

2. Embout selon la revendication 1, caractérisé en ce qu'il comporte des moyens de fixation permettant le positionnement axial et angulaire de la pièce de détrompage comprenant une bague calibrée (15) enfilée sur le corps cylindrique creux (10), prenant appui sur un plan de référence axial de celui-ci et servant de butée axiale pour la pièce de détrompage, et une pièce cylindrique de fixation (16) enserrant la pièce de détrompage (14) et se vissant sur la partie postérieure filetée du corps (10) de l'embout.

3. Embout selon la revendication 2, caractérisé en ce qu'un écrou d'assemblage (17) sert à relier un embout à son vis à vis et est attaché de manière non rigide à la pièce de fixation (16).

4. Embout selon la revendication 3, caractérisé en ce que des moyens de compression radiale assurent l'arrangement hexagonal des fibres à l'intérieur du manchon malléable à l'extrémité du corps (10) de l'embout.

5. Embout selon l'une quelconque des revendications 1 à 4, caractérisé en ce que l'organe de détrompage comprend 3 dents symétriques occupant chacune un secteur de 120°.

6. Utilisation de l'embout selon l'une quelconque des revendications 1 à 5 dans un connecteur de faisceaux de fibres, caractérisée en ce qu'elle met en oeuvre une pièce intermédiaire de liaison cylindrique creuse (19), de diamètre intérieur égal au diamètre extérieur de l'organe de détrompage (14) et dont la surface extérieure comporte des filetages, cette pièce étant placée autour des pièces de détrompage emboîtables et fixée aux deux embouts à connecter par les écrous portés par ces embouts.

## Patentansprüche

1. Klemmvorrichtung für ein Bündel aus hexagonal angeordneten optischen Fasern, mit einem zylindrischen Hohlkörper (10), der einen mit einem Außengewinde versehenen Hinterabschnitt und einen Vorderabschnitt aufweist, dessen zentrisch zu seiner Achse verlaufende glatte Außenfläche eine Bezugsfläche für das Positionieren verschiedener, die Klemmvorrichtung bildender Bauteile darstellt und in dessen Innerem die Fasern liegen, die von einer nachgiebigen, im Inneren des Hohlkörpers angebrachten Hülse (11) gehalten sind, die sie so umschließt und zusammendrückt, daß sie an dem zu verbindenden Ende eine hexagonale Anordnung einnehmen, wobei ein Fehlstellungssicherungsorgan vorgesehen ist, das die Winkelübereinstimmung einer solchen Anordnung mit ihrem Gegenstück gewährleistet, dadurch gekennzeichnet, daß das Fehlstellungssicherungsorgan ein Zylinderteil (14) ist, das auf der Bezugsfläche sitzt und dessen verbindungsseitiges Ende die Form einer Krone aufweist, die in der Form von symmetrischen Sägezähnen eingeschnitten ist, wobei 3 n Zähne jeweils einen Sektor von 120° /n besetzen und wobei n die Zahl 1 oder die Zahl 2 ist, und daß das Fehlstellungssicherungsorgan mit seinem Gegenstück so zusammenarbeitet, daß fortschreitend die winkelmäßige Positionierung der aneinanderzufügenden Faserbündel und am Ende des Zusammenfügens ihre axiale Positionierung erhalten werden.

2. Klemmvorrichtung nach Anspruch 1, gekennzeichnet durch Befestigungsmittel zum axialen und winkelmäßigen Positionieren des Fehlstellungssicherungsorgans mit einem geeichten Ring (15), der auf den zylindrischen Hohlkörper (10) aufgeschoben ist und in einer axialen Bezugsebene dieses Hohlkörpers in Anlage kommt, wobei er als axialer Anschlag für das Fehlstellungssicherungsorgan dient, und ein zylindrisches Befestigungsstück (16), das das Fehlstellungssicherungsorgan (14) umschließt und auf den Hinterabschnitt des Hohlkörpers (10) der Klemmvorrichtung geschraubt ist.

3. Klemmvorrichtung nach Anspruch 2, dadurch gekennzeichnet, daß eine Montagemutter (17) dazu dient, eine Klemmvorrichtung mit ihrem Gegenstück zu verbinden, wobei sie lose am Befestigungsstück (16) angebracht ist.

4. Klemmvorrichtung nach Anspruch 3, gekennzeichnet durch Radialkompressionsmittel, die am Ende des Hohlzylinders (10) der Klemmvorrichtung im Inneren der nachgiebigen Hülse die hexagonale Anordnung der Fasern gewährleisten.

5. Klemmvorrichtung nach einem der Ansprüche 1 bis 4, dadurch gekennzeichnet, daß das Fehlstellungssicherungsorgan drei symmetrische Zähne aufweist, die jeweils einen Sektor von 120° besetzen.

6. Verwendung der Klemmvorrichtung nach einem der Ansprüche 1 bis 5 in einem Faserbündelverbinder, gekennzeichnet durch ein zylindrisches, hohles Zwischenverbindungsstück (19), dessen Innendurchmesser gleich dem Außendurchmesser des Fehlstellungssicherungsorgans (14) ist und dessen Außenfläche mit einem Gewinde versehen ist, wobei das Zwischenverbindungsstück um die ineinanderfügbaren Fehlstellungssicherungsorgane angebracht und an zwei zu verbindenden Klemmvorrichtungen mit Hilfe von Schrauben befestigt sind, die von diesen Klemmvorrichtungen getragen sind.

**Claims**

1. Clamping means for a bundle of hexagonally disposed optical fibres comprising a cylindrical hollow body (10) which comprises an externally threaded rear portion and a front portion whose smooth outer surface extending centrally with respect to its axis represents a reference surface for positioning various components forming the clamping means and in whose interior the fibres lie, which are held by a resilient sleeve (11) which is disposed in the interior of the hollow body and encloses and compresses said fibres so that they assume, at the end to be connected a hexagonal arrangement, an erroneous position preventing means being provided which guarantees the angular agreement of such an arrangement with its counter member, characterized in that the erroneous position preventing means is a cylindrical part (14) which is mounted on the reference surface and the connection-side end of which has the form of a crown which is cut in the form of symmetrical saw teeth, 3 n teeth each occupying a sector of 120°/n, n being the number 1 or the number 2, and that the erroneous position preventing means cooperates with its counter member in such a manner that progressively the angular positioning of the fibre bundles to be abutted and at the end of their abutment their axial positioning is obtained.

2. Clamping means according to claim 1, characterized by securing means for the axial end angular positioning of the erroneous position preventing means comprising a calibrated ring (15) which is pushed onto the cylindrical hollow body (10) and comes to bear in an axial reference plane of said hollow body, serving as axial stop for the erroneous position preventing means, and a cylindrical securing member (16) which encloses the erroneous position preventing means (14) and is screwed onto the rear portion of the hollow body (10) of the clamping means.

3. Clamping means according to claim 2, characterized in that an assembly nut (17) serves to connect a clamping means to its counter member, being disposed loosely on the securing member (16).

4. Clamping means according to claim 2, characterized by radial compression means which ensure the hexagonal arrangement of the fibres at the end of the hollow cylinder (10) of the clamping means in the interior of the flexible sleeve.

5. Clamping means according to any one of claims 1 to 4, characterized in that the erroneous position preventing means comprises three symmetrical teeth each occupying a sector of 120°.

6. Use of the clamping means according to any one of claims 1 to 5 in a fibre bundle connector, characterized by a cylindrical hollow intermediate connecting member (19) whose internal diameter is equal to the external diameter of the erroneous position preventing means (14) and whose outer surface is provided with a thread, the intermediate connecting member being disposed round the interlockable erroneous position preventing means and secured on two clamping means to be connected with the aid of screws which are carried by said clamping means.

FⅠG. 1

FIG. 2

b)

$P_2$ $P_3$ $P_1$

Fig. 3

$P_1$

$D_1$

$P_2$

$D_2$

$P_3$

$D_3$

a)